Europäisches Patentamt

European Patent Office

Office européen des brevets

(19)

(11) Publication number: **0 125 379**
**A2**

(12)
# EUROPEAN PATENT APPLICATION

(21) Application number: **84100819.6**

(22) Date of filing: **26.01.84**

(51) Int. Cl.³: **F 24 F 3/16**

(30) Priority: **13.05.83 JP 82535/83**

(43) Date of publication of application:
**21.11.84 Bulletin 84/47**

(84) Designated Contracting States:
**CH DE FR GB IT LI NL**

(71) Applicant: **Endo, Keiko**
**6-1-705, Echujima 3-chome Koutou-ku**
**Tokyo(JP)**

(72) Inventor: **Endo, Kiyomu**
**6-1-705, Echujima 3-chome Koutou-ku**
**Tokyo(JP)**

(74) Representative: **Riederer Freiherr von Paar zu Schönau,**
**Anton et al,**
**Freyung 615 Postfach 2664**
**D-8300 Landshut(DE)**

(54) Air flow generating apparatus.

(57) The described air flow discharge generating apparatus generates an air stream by a corona discharge without a mechanically operating section and is used for an air cleaning apparatus or an air conditioner. This apparatus has a plurality of electrode plates arranged at a predetermined interval or hollow electrodes to form air flow passages, a number of ionizing wires arranged at positions in predetermined distances from the ends of the electrodes, and rod-shaped magnets attached to the ends of the respective electrodes. Since ions produced by a corona discharge are accelerated magnetically by the magnets, ion flow is accelerated, thereby remarkably increasing the velocity and air pressure of the air stream generated.

Fig. 2

EP 0 125 379 A2

**PATENTANWÄLTE**

Dipl.-Ing. Anton Freiherr
**Riederer von Paar**
D-8300 Landshut **0125379**
Postfach 2664, Freyung 615
☎ Landshut (0871) 22170
Fax (CCITT 2) 2 min, manuell
Telex 58441 glala d

Frhr. Riederer v. Paar, Postfach 2664, D-8300 Landshut

— 1 —

Partner in München:
**DIEHL & KRESSIN**
Dr. H. O. Diehl, Dr. H-R. Kressin
☎ München (089) 177061
Fax (089) 177461 (autom.)
Telex 5215145 Zeus d

Keiko Endo

6-1-705, Echujima 3-chome, Koutou-ku,

Tokyo, Japan

## Air Flow Generating Apparatus

## BACKGROUND OF THE INVENTION

### 1. Field of the Invention

The present invention relates to an air flow generating apparatus and, more particularly, to an air flow generating apparatus which increases air flow rate and wind pressure.

### 2. Description of the Prior Art

An air cleaner including an air flow generator is known for example from Japanese Patent No. 996 051. The prior art apparatus comprises a set of parallel dust collecting electrode plates having intervals between them which constitute air flow passages. Ionizing wires are installed outside the intervals parallel to the edges of the electrode plates which edges constitute the air inlet openings of the intervals, substantially facing the center of said intervals. A corona discharge is produced between the wires and the electrode plates upon application of a voltage therebetween, thereby imparting kinetic energy to gas molecules to generate an air stream directed from the wires toward the intervals between the electrode plates by an attractive force operating upon the positive ions from the electrode plates. However, the electric field between the ionizing wires and the electrode plates is directed mainly transversely if the wires are very close to the end margins of the plates, thus, resulting in little acceleration of the gas molecules, or is rather

0125379

weak if the wires are rather distant from the respective end margins of the electrode plates, thereby also resulting in little acceleration of the gas molecules.

The volume and the cleaning efficiency of a cleaning chamber the air of which is to be cleaned by an air cleaning apparatus are different depending upon the purpose of using the cleaning chamber. Thus, an air flow generating apparatus used in the air cleaning apparatus requires the performance capable of generating an air flow rate and an air pressure larger than the above-described values corresponding to them. The above-described prior art relates to the example of the air flow generating apparatus used in the air cleaning apparatus. However, when the air flow generating apparatus is applied to an air conditioner (a room cooling and heating apparatus), the apparatus requires an air flow velocity and an air pressure (static and dynamic pressures) much larger than the values obtained in the conventional apparatus.

Thus, in the conventional air flow generating apparatus, there are disadvantages such that the velocity and air pressure of the air stream to be produced are defined substantially to a predetermined value which is lower than desired, to a degree so as to be insufficient, when the high voltage of the power source is defined to a constant value.

SUMMARY OF THE INVENTION

According to the present invention as characterized in the claims, since the ions produced by the corona discharge are accelerated by both an electric field and a magnetic field, the ion flowing velocity is enhanced to remarkably increase the air flow velocity and air pressure thus produced, and when this is applied to an air cleaning apparatus, the air cleaning efficiency can be significantly improved. Also, if applied to the air cleaning apparatus, equivalent air flow velocity to that of the conventional apparatus can be obtained by less discharge voltage. Accordingly, the amount of produced ozone upon discharging can be reduced. Further, when this is applied to an apparatus such as a blower for an air conditioner which requires relatively large air flow velocity and air pressure, the air flow velocity and air pressure can be remarkably increased. Consequently, an air flow generating apparatus which is useful for improving the increases in the air flow velocity and air pressure without production of mechanical noise can be provided.

Many other features, advantages and additional objects of the present invention will become manifest to those versed in the art upon making reference to the detailed description which follows and the accompanying sheet of drawings.

BRIEF DESCRIPTION OF THE DRAWINGS

Fig. 1 is a schematic plan view showing a conventional air flow generating apparatus;

Figs. 2 to 5 show an embodiment of an air flow generating apparatus according to the present invention, i.e.,

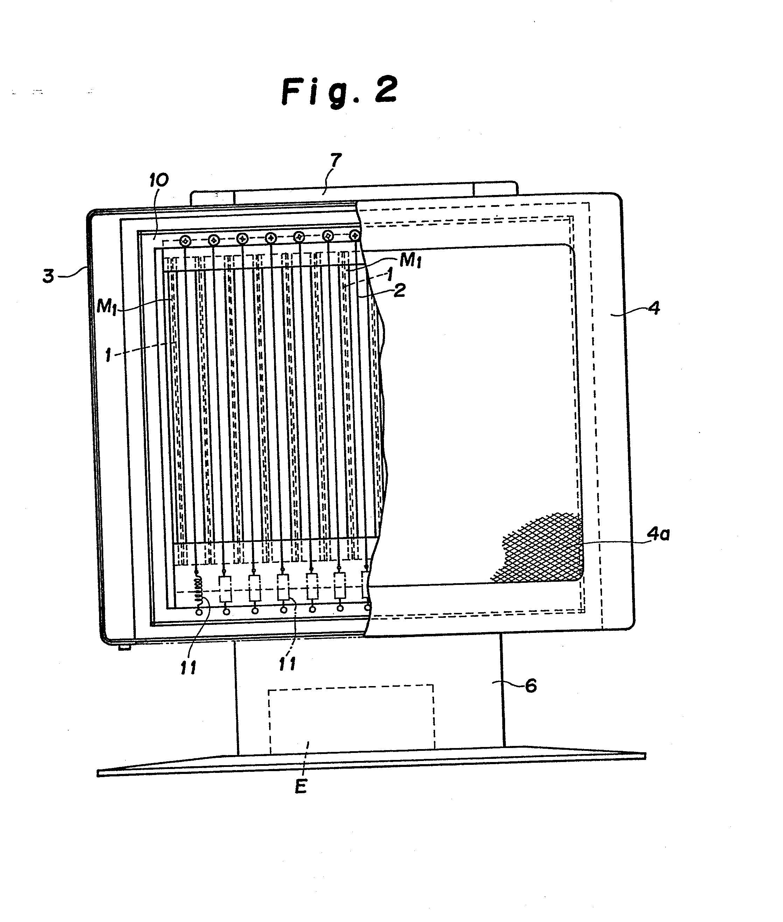

Fig. 2 a fragmentary front view of the apparatus;

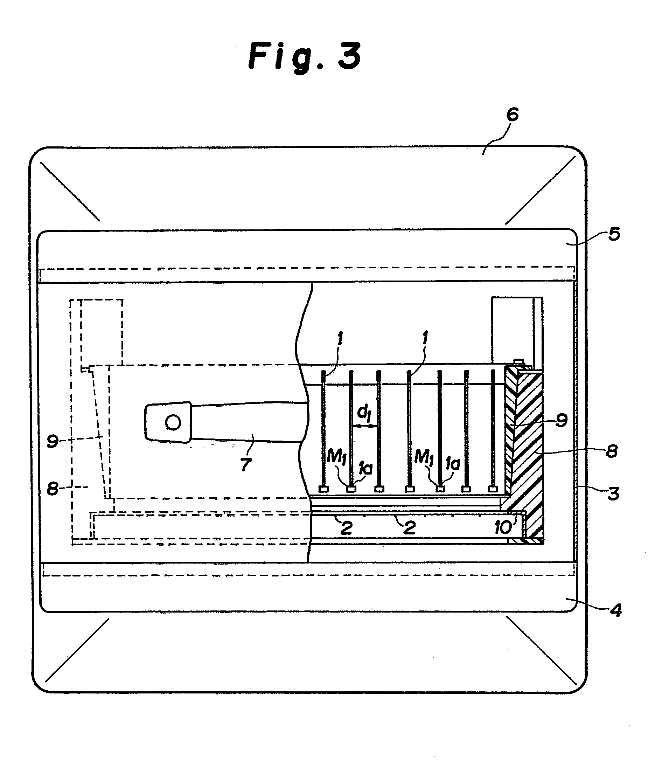

Fig. 3 a fragmentary plan view of the apparatus;

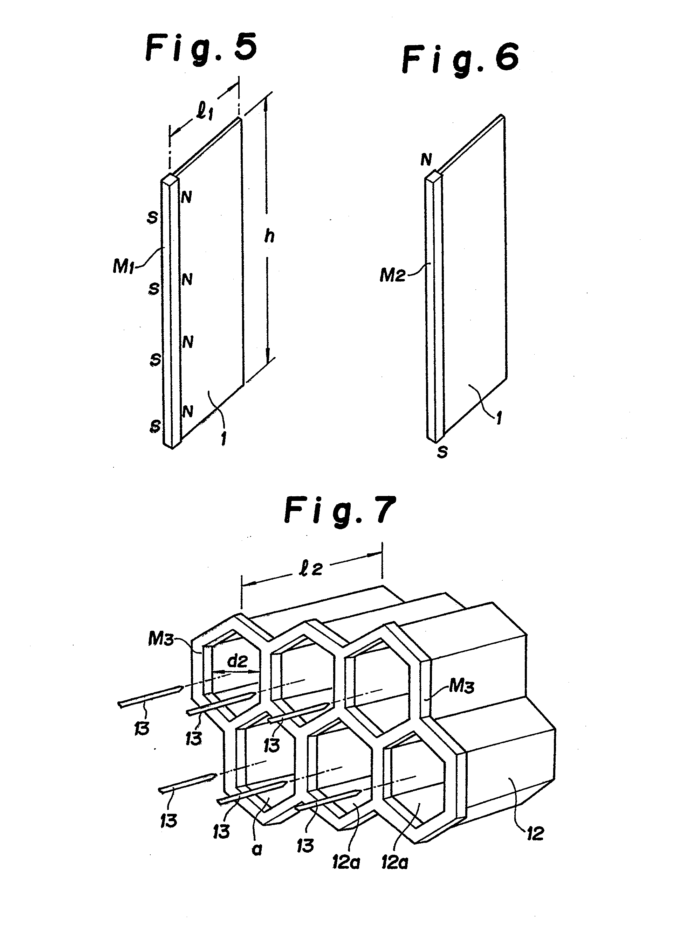

Fig. 4 a circuit diagram showing a connecting relationship between the ionizing wires, electrode plates and a power source;

Fig. 5 a perspective view showing the attaching state of rod-shaped magnets to the respective electrode plates;

Fig. 6 a perspective view similar to Fig. 5 but showing a modified example of the magnets applied;

Fig. 7 a perspective view showing another embodiment of the apparatus according to the invention.

ILLUSTRATION OF THE PRIOR ART

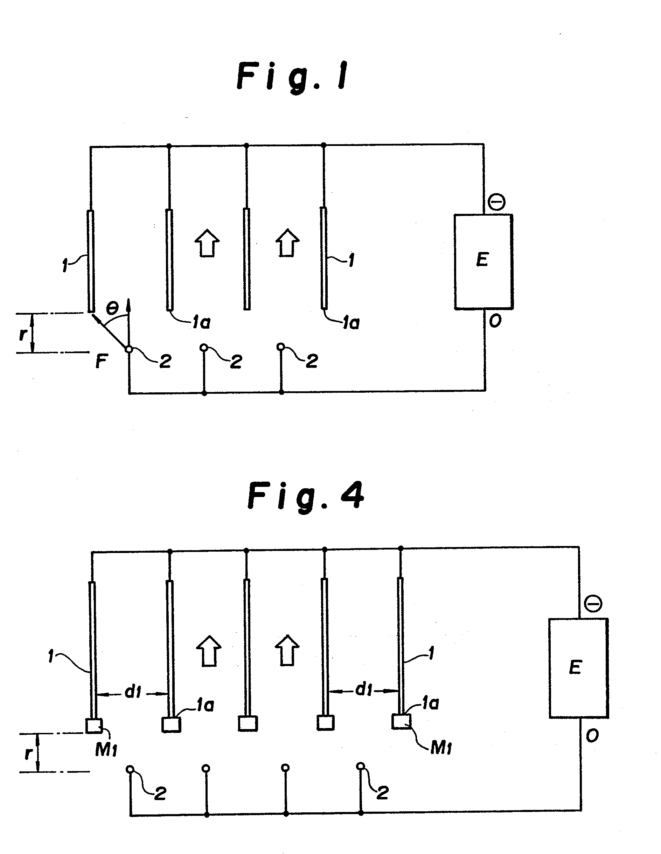

A conventional air stream generating apparatus will be described with an example used in an air cleaning apparatus with reference to Fig. 1. In Fig. 1, reference numeral 1 designates dust collecting electrode plates, which are arranged at predetermined constant intervals along an air flow passage.

Ionizing wires 2 are respectively installed at the outside position isolated at a distance r from the plane connecting the ends 1a of the respective electrode plates 1, on extension lines from substantially central positions of the gaps between the electrode plates 1. A predetermined high voltage of approx. 15 KV is applied with the electrode plates 1 as negative polarity between the ionizing wires 2 and the electrode plates 1 from a power source E. A corona discharge is produced between the wires 2 and the electrode plates 1 upon application of the voltage between wires 2 and the electrode plates 1, thereby imparting kinetic energy to viscous gas molecules to generate an air stream directed from the wires 2 toward the intervals when numerous positive ions are attracted to the side of the electrode plates 1. When the air stream is produced, dusts in the air are charged in positive ions and collected to the dust collecting electrode plates 1.

The force for producing an air stream in the interval in case that a voltage supplied from the power source E to between the wires 2 and the electrode plates 1 is constant, is, as shown in Fig. 1, given by the component force $F\cos\Theta$ of the force F directed from the wire 2 to the electrode plate 1, where $\Theta$ is an opening angle from the line directed toward the central position of the gap from the wire 2 as an origin and the line for connecting the ends 1a of the electrode plates 1. When the distance r is approached to 0 in this case, the angle $\Theta$ approaches $90°$ and accordingly the force $F\cos\Theta$ approaches 0. Thus, the force for producing the air stream is substantially vanished. When the distance r is, on the other hand, increased, the electric field between the wire 2 and the end 1a of the electrode plate decreases proportionally to $1/r^2$, thereby remarkably weakening the corona discharge. Thus, similarly to the above, the air stream is substantially vanished. In this manner, when the voltage supplied from the power source is constant, an adequate value exists in the set range of the distance r, thereby defining the velocity of the air stream to be produced substantially to a predetermined value of approx. 0.5 to 2 m/sec.

DETAILED DESCRIPTION OF THE PREFERRED EMBODIMENTS

The present invention will now be described in detail with reference to Figs. 2 to 7. Figs. 2 to 5 show an embodiment applied to an air cleaning apparatus. In the drawings from Fig. 2, like reference numerals identify like elements as in Fig. 1 and the description of same will not be repeated.

The invention is devised on the basis of the following investigated fact. More particularly, as shown in Fig. 4, in case that a voltage is applied between the electrode plates 1 and the ionizing wires 2 with the electrode plates 1 as negative polarity, ions produced by a corona discharge are, when rod-shaped magnets $M_1$ having S-poles at the front surfaces facing the wires 2 and N-poles at the back surfaces turned away therefrom are attached as shown in Fig. 5 to the ends 1a of the respective electrode plates 1 to be described later, accelerated by the magnetic field produced by the magnets, thereby increasing the velocity and air pressure of the air thus produced. Further, the velocity and the air pressure of the air flow can be increased not only in the case that the rod-shaped magnets have in polarity S-poles at the front faces and N-poles at the back surfaces thereof, but in the case of magnets $M_2$ having N-poles and S-poles at both ends of longitudinal direction of the rod magnets as shown in Fig. 6. In this manner, when the rod-shaped magnets $M_1$ or $M_2$ made of suitable intensity of magnetism are respectively attached to the ends 1a of the respective electrode plates 1, irrespective of the direction and intensity of the poles the velocity and air pressure of the air flow can be increased as can be seen from the experimental facts.

In the construction, in Figs. 2 to 5, reference numeral 3 designates a casing, in which inlet and outlet side masks 4 and 5 respectively having mask nets 4a and 5a are detachably mounted to become an air flow inlet and an outlet at the upside and the downside in Fig. 3, respectively. A stand 6 is mounted at the lower portion of the casing 3, and a handle 7 is mounted on the top of the casing 3. This is constructed as a portable type capable of being installed at an arbitrary position in the

0125379

exemplified embodiment.

The casing 3 has therein functional units which respectively have ionizing function, dust collecting function and ozone decomposing function. More particularly, a unit containing frame 8 is fixedly secured substantially to the center of the casing 3, and a dust collecting unit frame 9 is detachably mounted on the frame 8. The frame 9 has a plurality of the dust collecting electrode plates 1 aligned at a predetermined interval $d_1$. The electrode plates 1 are commonly connected through a suitable terminal board and to one terminal of a power source E. In the present invention, rod-shaped magnets $M_1$ are respectively attached to the ends 1a of the respective electrode plates 1. The magnet $M_1$ employs, as shown in Fig. 5, N-poles of the side faces attached to the electrode plates 1 and S-poles of the front end faces (which are the ionizing wire side).

The front side of the unit containing frame 8 is slightly expanded. Ionizing unit frames 10 formed of metal are engaged with the expanded portion. The ionizing wires 2 are installed between the upper and lower beams at the frame 10. The wires 2 have a coil spring 11 elastically extended at the lower portion thereof. The wires 2 are defined in this installed state at the position isolated by a predetermined distance r from a plane connecting the front edges 1a of the electrode plates 1 on the front extension lines thereof, i.e. substantially from the central positions of the gaps between the electrode plates 1. The wires 2 are connected to the other terminal of the power source E via lead wires led from the frame 10.

The materials and the dimensions of the respective members will be described. The rod-shaped magnets $M_1$, $M_2$ are formed of ferrite having 2.2x2.2 mm in section and approx. 100 mm in length of square rod shape. The electrode plates 1 are each formed of a brass plate which is approx. 0.4 to 0.8 mm thick as a base, and is plated with a noble metal for accelerating ozone decomposition. The electrode plate 1 has a size 20 mm of width $\ell_1$ and approx. 100 mm of heigth h. The interval length $d_1$ formed by the electrode plates 1 is approx. 18.5 mm. Further, the wires 2 are formed of tungsten having approx. 60 $\mu$m in

diameter, and have a noble metal plating layer similar to the above. The distance r between the plane connecting the edges 1a of the electrode plates 1 and the wire 2 is approx. 13 mm.

It is noted that the direction of magnetization of the rod-shaped magnet $M_1$ attached as described above is not limited to that in the above embodiment, but can also be as in the magnet $M_2$ having the N-poles and S-poles at both ends of longitudinal direction as shown in Fig. 6. In the magnet $M_2$, for obtaining the pole states formed as described above, a permanent magnet may be employed or an electromagnet wound with coils on a suitable position may be adopted within the scope of the present invention.

The operation of the above embodiment of the air flow generating apparatus will be described.

When a power switch (not shown) is closed ON to apply a high voltage of a predetermined value with the electrode plates 1 at negative polarity between the ionizing wires 2 and the electrode plates 1, corona discharges are produced between the wires 2 and the vicinity of the ends 1a of the electrode plates 1. The numerous positive ions generated by the corona discharges have a trend of moving toward the electrode plates 1 side by the electric field produced between the electrode plates 1 and the wires 2. Simultaneously with the moving trend by the electric field, the positive ions are driven by the magnetic field of the magnets $M_1$ and accordingly accelerated in flow velocity. When the numerous ions are moved toward the electrode plates 1 side, their kinetic energy is applied to the viscous gas particles, a type of air stream is generated in this manner, thereby producing an air stream flowing toward the intervals from the wires 2 side toward the electrode plates side. The ion accelerating operations by the magnets $M_1$ in the course of generating the air stream are produced substantially in the same manner irrespective of which of the pole states shown in Figs. 5 and 6 is applied. The reason why the above-described ion accelerating operations are produced as described above even by the magnets $M_2$ having N-poles and S-poles at both ends of the rod-shaped magnets as shown in Fig. 6 is considered to be that an operation similar to the new magnetizing operation is caused in the magnets $M_2$ due to the high electric field produced between the wires 2 and the electrode plates 1, thereby operating the magnetization produced at the front end faces and the back surfaces similarly to the magnets $M_1$ having the pole states as shown in Fig. 5 to accelerate the ions.

Examples of numeral data such as the applied voltage value and the velocity of the generated air stream will be given. The magnetic flux density in the air interval between the wires 2 with the pole states of the magnets as shown in Fig. 5 was approx. 3,400 gauss. The velocity of the air stream obtained when −6 KV was applied between the wires 2 grounded and the electrode plates 1 was approx. 2 m/sec. (0.6 m/sec. in case of the conventional example in Fig. 1), and the fully sealed static pressure was 0.3 mmAq (0.1 mmAq in case of the conventional example in Fig. 1). When the voltage applied to the electrode plates 1 was −13 KV, the velocity of the air stream was approx. 6 m/sec. (1.5 m/sec. in case of the conventional example in Fig. 1), and fully sealed static pressure was 0.9 mmAq (0.2 mmAq in case of the conventional example in Fig. 1).

Similar results to the above case could be obtained even if the electrode plates 1 were grounded and negative high voltage was applied to the wires 2 side. At this time, the pole state of the magnets $M_1$ was reverse to that in Fig. 5.

Fig. 7 shows another embodiment of an apparatus according to the invention. In this embodiment, cylindrical electrodes 12 of honeycomb shape in section, constituting unit cells 12a, are employed instead of the electrode plates, and stylus-shaped ionizing wires 13 are adopted corresponding to above described wires 2. The wires 13 are respectively provided corresponding to the unit cells 12a of the electrodes 12, the openings of the unit cells 12a are directed toward the central position in such a manner that the stylus ends and the edges of the openings of the unit cells are arranged at a predetermined interval. Magnets $M_3$ are arranged at the ends of the openings of the respective unit cells. The magnets $M_3$ are together formed in the same honeycomb shape as the opening ends, of ferrite as described above, and the pole states are such that the front end faces of the wires 13 are magnetized to be S-poles and the back surfaces thereof are N-poles in the same manner as the magnet $M_1$. The electrodes 12 are, for example, made of aluminium and constructed so that the width $d_2$ of the unit cell 12a is approx. 20 mm and the length $\ell_2$ of the cylindrical electrode 12 is approx. 5 to 100 mm. When the electrodes 12 are made of aluminium, the resulting advantage is that the production costs are reduced.

The corona discharging operation between the wires 13 and the electrodes 12, and the ion accelerating operation by the magnets $M_3$ are substantially similar to those of the first embodiment. The velocity and air pressure of the air flow thus generated can be further increased by approx. 20% as compared with the case of the first embodiment in case of the same applied voltage value. This is because the arrangement of the electrodes is more densely performed for the wires.

In the embodiment described above, the sectional shape of the unit cells is hexagonal. However, the present invention is not limited to the particular case. For example, other shapes such as square shape may also be employed, and circular shape may also be adopted, the rod-shape of the magnets also covering an arc-shape. More particularly, the "honeycomb" shape of the electrodes of the above embodiment includes the shapes other than the hexagonal shape of the unit cell within the scope of the present invention.

**PATENTANWÄLTE**

Dipl.-Ing. Anton Freiherr
**Riederer von Paar**
D-8300 Landshut **0125379**
Postfach 2664, Freyung 615
☎ Landshut (0871) 22170
Fax (CCITT 2) 2 min. manuell
Telex 58441 glala d

Frhr. Riederer v. Paar, Postfach 2664, D-8300 Landshut

Keiko Endo

6-1-705, Echujima 3-chome, Koutou-ku,

Tokyo, Japan

Partner in München:
**DIEHL & KRESSIN**
Dr. H. O. Diehl, Dr. H-R. Kressin
☎ München (089) 177061
Fax (089) 177461 (autom.)
Telex 5215145 Zeus d

_1_

## Air Flow Generating Apparatus

### Patent Claims

1. An air flow generating apparatus comprising:
   - a casing (3) having an air flow inlet (4) and an air flow outlet (5),
   - within the casing, a polarity of electrodes (1, 12) to be charged by a first polarity , arranged at intervals so as to constitute air flow passages,
   - ionizing wires (2, 13) to be charged by a second polarity installed at predetermined distances from said intervals,
   characterized by rod-shaped magnets ($M_1$, $M_2$, $M_3$) arranged in the region of or between the electrodes (1, 12) and the ionizing wires (2, 13).

2. Air flow generating apparatus according to claim 1, characterized in that the electrodes (1) are parallel electrode plates having the intervals constituting the air-passages between them, the rod-shaped magnets ($M_1$) being attached along the end margins of the electrodes nearest to the ionizing wires (2) which themselves are installed parallel to and at a predetermined distance from imaginary lines extending centrally between adjacent magnets in a plane connecting the magnets.

3. Air flow generating apparatus according to claim 1, characterized in that the electrodes (12) are tubular hollow electrodes having inlet and outlet openings and constituting a plurality of unit cell spaces which from the air flow passages, the rod-shaped magnets ($M_3$) being attached to the edges of the inlet openings which are directed toward the stylus-shaped wires (13) which themselves are installed at a predetermined distance from the plane connecting the magnets and are directed toward the inlet openings.

4. Air flow generating apparatus according to claim 3, characterized in that the tubular hollow electrodes have a honeycomb-shaped section.

0125379

# Fig. 1

# Fig. 4

0125379

# Fig. 2

0125379

# *Fig. 3*

## Fig. 5

## Fig. 6

## Fig. 7